# EUROPEAN PATENT SPECIFICATION

(11) **EP 1 632 120 B1**
(45) Date of publication and mention of the grant of the patent: **28.07.2010**
(21) Application number: 05107939.0
(22) Date of filing: 30.08.2005
(51) Int. Cl.: A01B 45/02

(54) **Lawn care apparatus**
Rasenversorgungsgerät
Outil pour entretenir un gazon

(30) Priority: 03.09.2004 GB 0419591
(43) Date of publication of application: 08.03.2006
(73) Proprietor: ROBERT BOSCH GMBH, 70469 Stuttgart (DE)
(72) Inventor: Quigley, Andrew, IP14 1EY, Stowmarket (DE)
(74) Representative: Bailey, David Martin

(56) References cited:
- AU-B3- 583 005
- DE-A1- 2 745 667
- DE-A1- 19 601 064
- GB-A- 2 350 999
- US-A- 1 669 471

## Description

The present invention relates to a lawn care device (eg. see US-A-1669471), in particular to a lawn raking or verticutting apparatus.

Lawns should be aerated as part of regular maintenance to improve drainage and help supply the soil with air. This leads to an improvement in the lawn appearance as water absorption is enhanced through the improvements in the supply of water and air to the grass roots. Conventionally, lawns have been aerated by the removal of moss and dead grass by using a manual lawn rake and by spiking the lawn with a fork to help improve drainage and air flow to the grass roots. A conventional lawn rake comprises an elongate shaft with a head section comprising a plurality of thin tines arranged in a fan shape and whose ends are bent at an angle substantially perpendicular to the fan. The rake is used by dragging the head of the rake over a section of lawn. Due to the design of the tines and the rake head, moss and dead grass are selectively removed with minimal damage and removal of healthy grass. The lawn is then spiked at regular intervals by driving a fork into the surface to a depth of several inches.

These processes are highly labour intensive and require considerable effort on the part of the gardener. Additionally, in the raking process, the moss and dead grass has to be collected for disposal. A further problem associated with aeration process is the lack of uniformity of the spiking process.

Powered lawn rakes are known, as are verticutters which provide aeration of the soil by forming slits in the soil surface, and both work well to reduce the effort involved in caring for the lawn. They typically provide a cylinder rotatable about an axis perpendicular to the direction of travel of the device. The cylinder has a plurality of tines or discs mounted thereon to provide the raking or verticutter function respectively. Whilst these devices remove moss and grass from the lawn, they are typically very poor at collecting the removed matter as collection is achieved substantially entirely by the mechanical throw effect of the rake unit. This poor debris throwing leads to frequent blocking of the machines. Often the moss and dead grass is re-deposited on the lawn surface whereupon it is worked by the action of rain and feet back to the soil surface. Alternatively, frequent stopping of the apparatus is required to remove the collected matter.

Accordingly, the present invention seeks to provide a lawn care apparatus which overcomes these disadvantages.

In its broadest sense, according to the present invention there is provided a lawn care apparatus as defined in claim 1.

The air flow generating means comprises a cylinder member in the form of a fan, most preferably in the form of a "squirrel cage fan."

Suitably, the lawn care elements are lawn raking elements or verticutting elements. In a preferred embodiment, the cylinder member is interchangeable and a common construction of lawn care apparatus is assembled with either a cylinder member carrying a plurality of lawn raking elements or a cylinder member carrying a plurality of verticutting elements.

In a further embodiment, the user is able to interchange these functions either by replacement of the cylinder units or by interchange of raking and verticutting elements on a common cylinder unit.

Suitably, the lawn raking elements are resilient tines, preferably sprung raker tines.

Suitably, the verticutting elements are discs or knives, suitably made from steel.

Preferably, the cylinder member comprises a plurality of circumferentially spaced fan blades. Suitable a plurality of walls are provided between adjacent fan blades to divide the fan into an arrangement of individual cells. More suitably the cylinder member has a hollow core.

Preferably, axial fan spokes are provided at the end faces of the cylinder member to improve airflow into the cylinder member such that, in use, air flows into the cylinder member through said axial fan spokes and is expelled from the body of the cylinder member as it rotates. More preferably, the cylinder member has a hollow core and has access passages between end faces to allow for a substantially free flow of air through the cylinder.

Preferably, the cylinder member is mounted within a cylinder working chamber which provides free access for air to the cylinder end faces from outside the cylinder working chamber.

Suitably, the collection means comprises a demountable box attachable to the rear, as defined in use, of the apparatus.

Preferably, the cylinder member is formed from a plurality of interfitting cylinder member elements. More preferably, each cylinder member element comprises a first ring having extending therefrom a plurality of circumferentially spaced arcuate fan blade elements, the fan blade elements terminating at a second ring; wherein a plurality of projections extend from each surface of first ring together forming, in the assembled cylinder member, attachment means for the lawn care elements.
The above and other aspects of the present invention will now be described in further detail, by way of example only, with reference to the accompanying drawings, in which:
Figure 1 is a perspective view of the chassis of an embodiment of a lawn care apparatus in accordance with the present invention;
Figure 2 is a perspective side view of the cylinder member of the apparatus of Figure 1;
Figure 3 is a part schematic side view of the embodiment of Figure 1;
Figure 4 is a perspective view of a raker element of the cylinder member of Figure 3;
Figure 5 is a perspective view of the chassis of a second embodiment of a lawn care apparatus in accordance with the present invention;
Figure 6 is a perspective side view of a cylinder member of lawn care apparatus of Figure 5. and
Figure 7 is a perspective view of a verticutter element of the cylinder member of Figure 5.

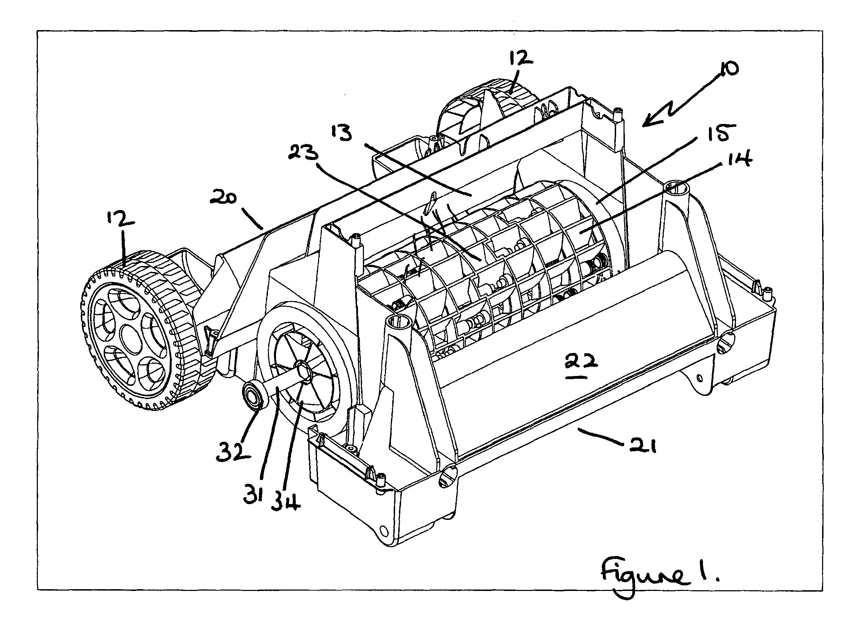

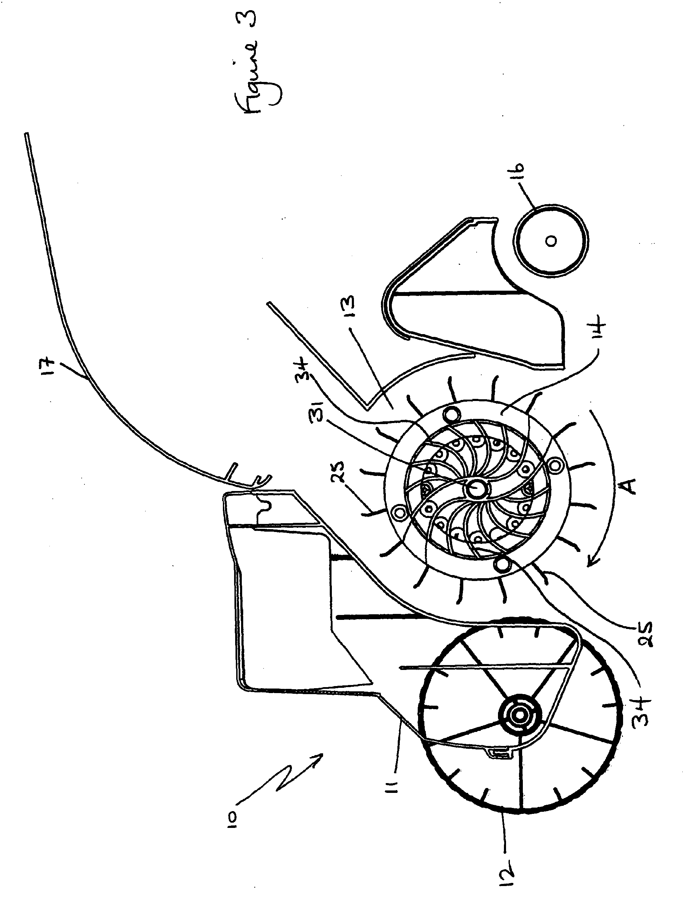

With reference to Figures 1 to 4, in a first embodiment, the present invention provides a lawn care apparatus 10 having a chassis 11 supported by a pair of front wheels 12 and a pair of rear wheels or a roller 16. Chassis 11 further comprises a cylinder member housing or working chamber 13 in which is mounted a cylinder member 14. The cylinder member 14 is caused to rotate in the direction marked by arrow A in Figure 3 about a horizontal axis in a conventional manner, such as by means of an electric motor or petrol engine (not shown). Cylinder member 14 is driven by said motor or engine through appropriate gearing or belt arrangements (not shown) acting through drive member 15 on cylinder member 14. Arms are suitably attached to the chassis or sides of the body housing to form a substantially U-shaped handle bar for guiding the apparatus.

Suitably, the height of the rotatable cylinder member 14 is adjustable by adjusting the height of the chassis 11 with respect to the wheels 12.

The apparatus includes a fan to generate a flow of air to entrain and direct stripped vegetation towards the collecting means. In the embodiment shown, the fan is provided by forming cylinder member 14 as a fan of the 'squirrel cage' type.

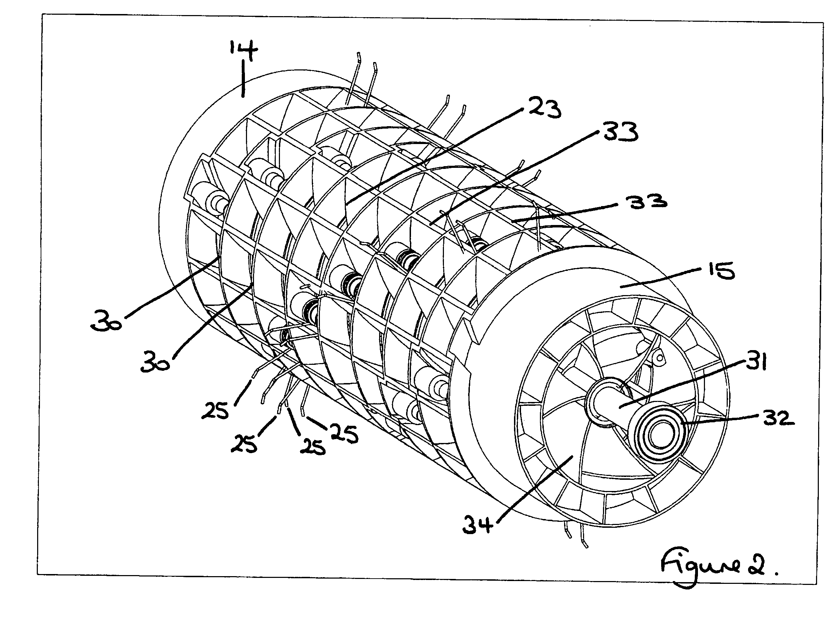

As more clearly seen in Figure 2, the cylinder member comprises a plurality of parallel circumferentially spaced fan blades 33. A plurality of walls 30 between adjacent fan blades divide the fan into an arrangement of individual cells 23. Each cell 23 forms a cavity that develops from the outer surface of the cylinder unit 14 to an inner hollow core. Within a number of cells are further provided attachment means 24 for a tine 25. As illustrated in Figure 2, attachment means 24 comprises a pair of opposed projections between adjacent walls 30 which engage a 'dual tine' 25, formed from a single piece of wire having a generally cylindrical core. Tines 25 may be provided for every individual cell. However, it is preferable to provide tines in only a proportion of the cells 23. The precise arrangement will be determined non-inventively by the person skilled in the art. It will be appreciated that the tines 25 may be attached to the cylinder member 14 by numerous alternative means.

The cylinder member 14 is supported upon a horizontal axle 31 that runs through its centre and extends beyond the end walls of the cylinder member, including mounting means 32 for connection to lawn care apparatus chassis 11, and connection means to said motor or engine.

Fan blades 33 of each cell 23 may be orientated radially or, more preferably, may be curved in a scoop-like arrangement or angled, as seen in the Figures, to improve airflow within the cylinder as is known in the art of squirrel cage fans. In the preferred embodiment shown, the cylinder is provided with an axial fan 34, provided at each end face of the cylinder member. In use, as the cylinder member 14 rotates, the axial fan spokes 34 serve to increase the efficiency with which air is drawn into the cylinder member 14, and leads to the generation of a more powerful radial flow as air is expelled through the angled cells 23 of the cylinder member 14. A relatively high rotational speed is advantageous. Rotational speeds of from around 2000 to 3000, preferably about 2500 rpm are particularly advantageous.

In the preferred embodiments, the chassis 11 and cylinder member working chamber 13 are designed to allow free flow of air to the end faces of the cylinder member 14 and thus through the fan of the cylinder member. This airflow is provided through the side walls of the cylinder member working chamber and the flow is therefore drawn from outside the working chamber.

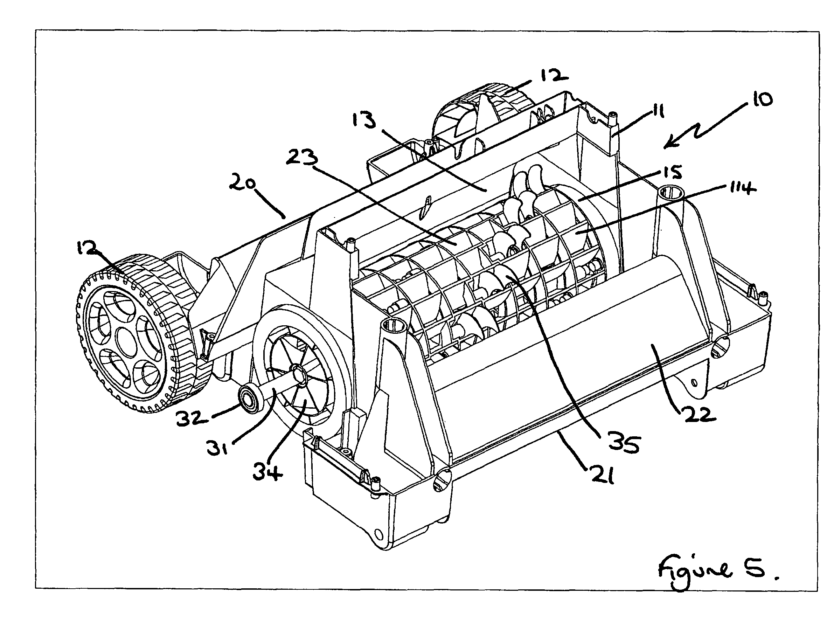

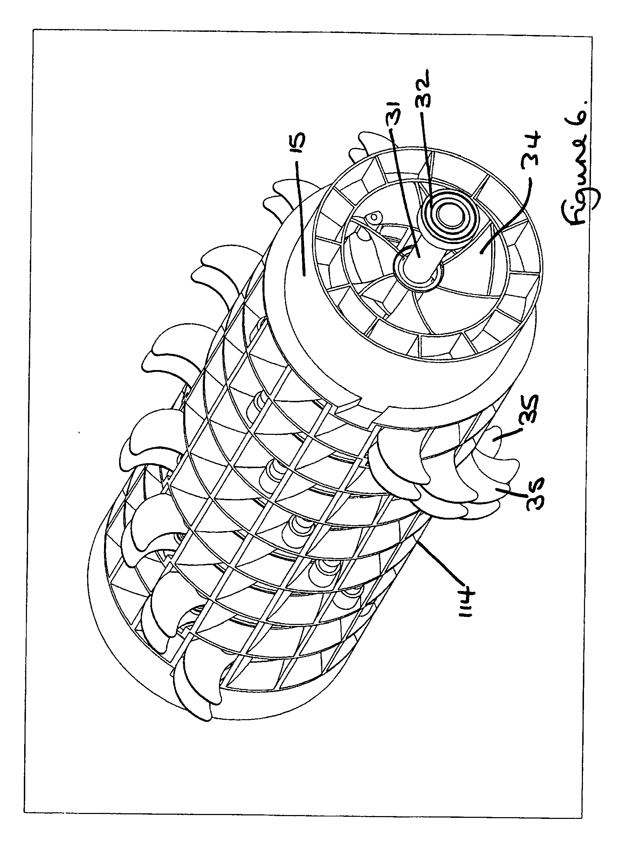

In a second embodiment of the present invention, illustrated in Figures 5 to 7, a cylinder member 114 of broadly similar structure to that described above is provided with blade or knife attachments 35 in place of tines to cut into the lawn surface to provide aeration of said lawn, thereby providing a verticutter. In the preferred embodiment illustrated, as is conventional, blade attachments 35 are not provided at every cell 23 position along the cylinder unit 14. In use, as the cylinder rotates the dispersed blade attachments provide a slit in a lawn surface.

The individual blades 35 are fixed to cylinder unit 14 by screws, clips, bolts or any such other removable means. In the embodiment shown, the blades clip or slide onto or into opposed projections formed between adjacent walls 30.

The blades can be formed from metal or resilient plastics materials and may be integrally formed with the cylinder unit 14.

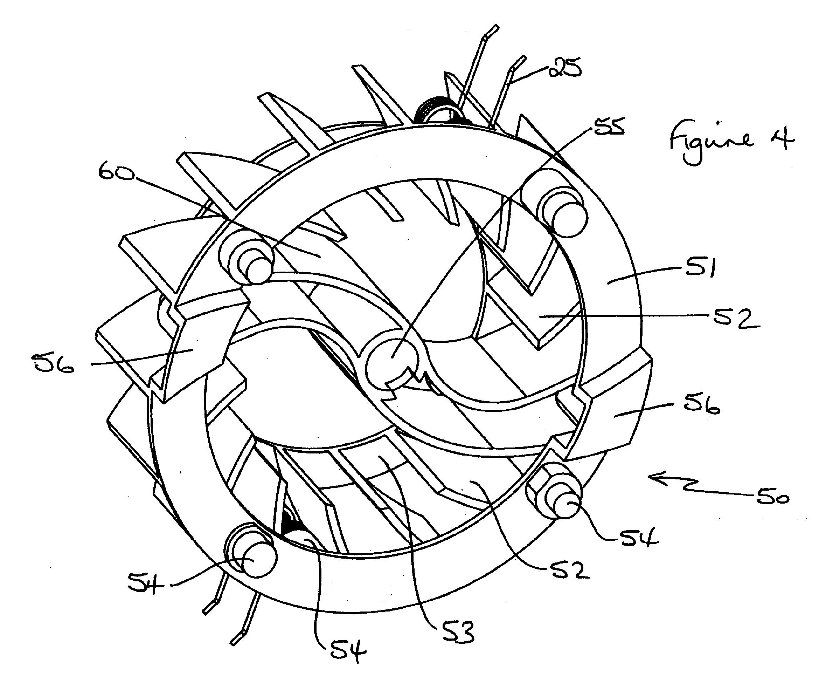

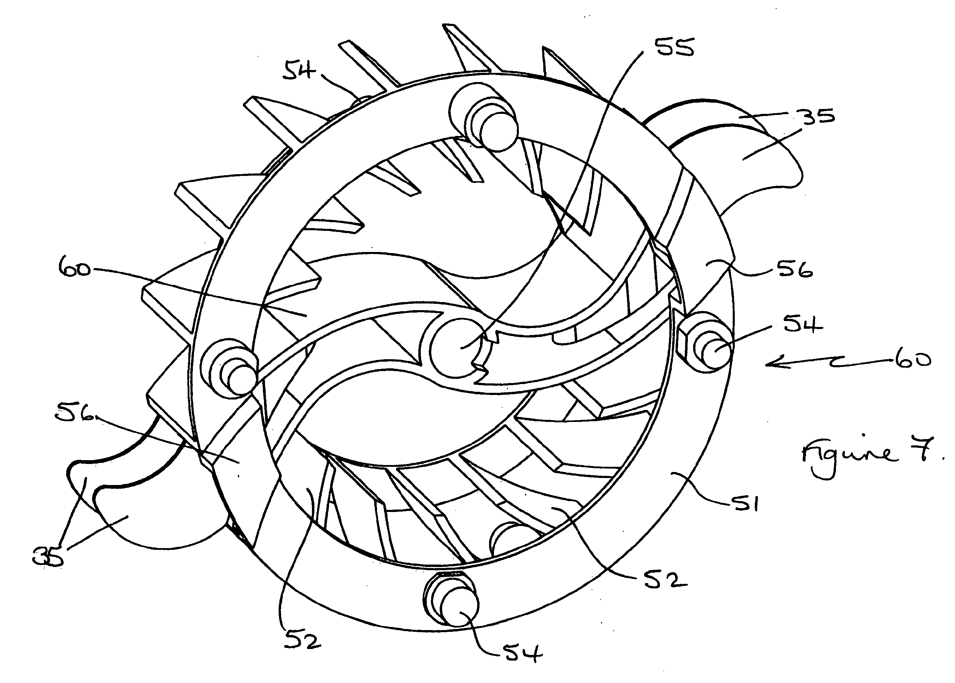

In the preferred embodiment shown, cylinder member 14 is formed from a plurality of interfitting cylinder member elements 50. By forming the cylinder member 14 in this manner, a cylinder member of any width can be formed. Each cylinder member element comprises a large ring 51 defining, in the assembled cylinder member, walls 30. Extending from large ring 51 are a plurality of circumferentially spaced arcuate fan blade elements 52, forming, in the assembled cylinder member, fan blades 33. Fan blade elements 52 terminate at a small ring 53. Rings 51, 53 provide support for the fan blade elements 52, In the embodiment shown, the outer diameter of small ring 53 corresponds generally to the inner diameter of large ring 51 such that the small ring 53 of one cylinder member element 50 fits into the large ring 51 of the adjacent member element 50. Extending from either surface of large ring 51 are a plurality of projections 54 which together form, in the assembled cylinder member, attachment means 24 described above (for tines 25 [Figure 4] or verticutter blades 35 [Figure 7]), as the projections 54 on one side of ring 51 oppose those on the other side of the ring. Cylinder member element 50 includes a central aperture 55 for receipt of axle 31 and further includes location elements 56 which act to provide rotation-locked location of adjacent cylinder member elements with respect to each other. In the embodiment shown, location elements 56 have a generally ridge-shaped form adapted to engage a corresponding aperture formed between adjacent fan blade elements 52 of an adjacent cylinder member element.

Each cylinder member element includes curved centre spokes 60 dividing the assembled cylinder member into two unobstructed passages to allow the free-flow of air through the cylinder member. The hollow core diameter is suitably in the region, in the embodiment shown, of around 90mm and the fan-blades have an outer diameter of around 150mm. Suitably, there are around 16 fan blades and the cylinder member is caused to rotate at around 2500rpm.

In a preferred embodiment of the invention, cylinder member 14 is demountable. Accordingly, an apparatus can be provided in which a raker element and a verticutter element are interchangeable to provide a complete lawn care apparatus. Additionally, a lawnmower cutting cylinder element may be provided, enabling the apparatus to function also as a cylinder lawnmower. Alternatively, the tines and slitter blades are interchangeable to enable interchange between raker and verticutter functions, using a common cylinder element.

A lawn care device according to the present invention provides a more versatile means of lawn care that can be quickly and readily adapted to provide removal of moss and dead grass cuttings and provide aeration of a lawn and with collection performance greatly enhanced by the strong airflow created by its novel construction. In addition to eliminating the need for two distinct pieces of apparatus, the versatility of the apparatus allows a user to complete the aeration of their lawn with greater efficiency and less effort.

## Claims

1. A lawn care apparatus (10) comprising cylinder member (14) rotatable about a transverse axis within a cylinder working chamber (13), wherein said cylinder member (14) comprises a plurality of lawn care elements and the apparatus comprises a collection means for collecting material removed, in use, from a lawn; **characterised in that** the cylinder member (14) is in the form of a fan defining an airflow generating means for generating an air flow to direct material removed from the lawn towards said collection means; and **in that** the cylinder member (14) is mounted within the cylinder working chamber (13) to provide a substantially free flow of air to at least one cylinder member end face from outside the cylinder working chamber (13) and through the centre of the cylinder member (14).

2. A lawn care apparatus as claimed in claim 1 in which the fan comprises a squirrel cage fan.

3. A lawn care apparatus as claimed in claim 1 or claim 2 in which the cylinder member (14) comprises a plurality of circumferentially spaced fan blades (33).

4. A lawn care apparatus as claimed in claim 3 in which the cylinder member (14) is formed from a plurality of interfitting cylinder member elements (50).

5. A lawn care apparatus as claimed in claim 4 wherein each cylinder member element (50) comprises a first ring having extending therefrom a plurality of circumferentially spaced arcuate fan blade elements, the fan blade elements terminating at a second ring; wherein a plurality of projections (54) extend from each surface of first ring together forming, in the assembled cylinder member, attachment means for the lawn care elements.

6. A lawn care apparatus as claimed in any one of claims 1 to 5 in which the cylinder member (14) includes at least one end face provided with a plurality of fan blade elements (34).

7. A lawn care apparatus as claimed in any one of claims 1 to 6 in which the lawn care elements comprise lawn raking elements (25).

8. A lawn care apparatus as claimed in claim 7 in which the lawn raking elements comprise resilient tines (25).

9. A lawn care apparatus as claimed in claim 7 in which the lawn raking elements comprise spring tines (25).

10. A lawn care apparatus as claimed in any one of claims 1 to 6 in which the lawn care elements comprise verticutting elements.

11. A lawn care apparatus as claimed in claim 10 in which the verticutting elements comprise disc elements.

12. A lawn care apparatus as claimed in either claim 10 or claim 11 in which the verticutting elements comprise knife elements.

13. A lawn care apparatus as claimed in any one of the preceding claims in which the cylinder member (14) is demountable.

14. A lawn care apparatus as claimed in any one of the preceding claims comprising at least two demountable cylinder members (14) as defined in any one of the preceding claims, wherein a first demountable cylinder member is provided with a plurality of lawn raking elements and a second demountable cylinder member is provided with a plurality of verticutting elements.

15. A lawn care apparatus as claimed in claim 14, comprising a further demountable cylinder member in the form of a lawnmower cylinder cutting blade assembly.

16. A lawn care apparatus as claimed in any one of claims 1 to 6 wherein the cylinder member is in the form of lawnmower cylinder cutting blade assembly.

## Patentansprüche

1. Rasenpflegevorrichtung (10), die ein Zylinderglied (14) umfasst, das um eine Querachse innerhalb einer Zylinderarbeitskammer (13) drehbar ist, wobei das Zylinderglied (14) eine Vielzahl von Rasenpflegeelementen umfasst und wobei die Vorrichtung umfasst: ein Sammelmittel zum Sammeln von bei Verwendung entferntem Material von einem Rasen;
**dadurch gekennzeichnet,**
**dass** das Zylinderglied (14) die Form eines Lüfters aufweist, der ein Luftströmungserzeugungsmittel definiert, um eine Luftströmung zu erzeugen, um von dem Rasen entferntes Material in Richtung des Sammelmittels zu lenken; und **dadurch**, dass das Zylinderglied (14) innerhalb der Zylinderarbeitskammer (13) eingebaut ist, um mindestens einer Zylinderglied-Stirnseite von außerhalb der Zylinderarbeitskammer (13) und durch die Mitte des Zylinderglieds (14) eine im Wesentlichen freie Luftströmung zuzuführen.

2. Rasenpflegevorrichtung nach Anspruch 1,
wobei der Lüfter einen Käfiglüfter umfasst.

3. Rasenpflegevorrichtung nach Anspruch 1 oder Anspruch 2,
wobei das Zylinderglied (14) eine Vielzahl in Umfangsrichtung beabstandeter Lüfterflügel (33) umfasst.

4. Rasenpflegevorrichtung nach Anspruch 3,
wobei das Zylinderglied (14) aus einer Vielzahl verschachtelter Zylindergliedelemente (50) gebildet ist.

5. Rasenpflegevorrichtung nach Anspruch 4,
wobei jedes Zylindergliedelement (50) einen ersten Ring umfasst, von dem eine Vielzahl in Umfangsrichtung beabstandeter gebogener Lüfterflügeleiemente ausgehen, wobei die Lüfterflügelelemente in einem zweiten Ring enden; wobei von jeder Oberfläche des ersten Rings eine Vielzahl von Vorsprüngen (54) ausgehen, die in dem montierten Zylinderglied gemeinsam ein Befestigungsmittel für die Rasenpflegeelemente bilden.

6. Rasenpflegevorrichtung nach einem der Ansprüche 1 bis 5,
wobei das Zylinderglied (14) mindestens eine Stirnseite aufweist, die mit einer Vielzahl von Lüfterflügelelementen (34) versehen ist.

7. Rasenpflegevorrichtung nach einem der Ansprüche 1 bis 6,
wobei die Rasenpflegeelemente Rasenrechenelemente (25) umfassen.

8. Rasenpflegevorrichtung nach Anspruch 7,
wobei die Rasenrechenelemente federnde Zinken (25) umfassen.

9. Rasenpflegevorrichtung nach Anspruch 7,
wobei die Rasenrechenelemente Federzinken (25) umfassen.

10. Rasenpflegevorrichtung nach einem der Ansprüche 1 bis 6,
wobei die Rasenpflegeelemente Vertikutierelemente umfassen.

11. Rasenpflegevorrichtung nach Anspruch 10,
wobei die Vertikutierelemente Scheibenelemente umfassen.

12. Rasenpflegevorrichtung nach Anspruch 10 oder nach Anspruch 11,
wobei die Vertikutierelemente Messerelemente umfassen.

13. Rasenpflegevorrichtung nach einem der vorhergehenden Ansprüche,
wobei das Zylinderglied (14) demontierbar ist.

14. Rasenpflegevorrichtung nach einem der vorhergehenden Ansprüche,
wobei die Rasenpflegevorrichtung mindestens zwei demontierbare Zylinderglieder (14) umfasst, wie sie in einem der vorhergehenden Ansprüche definiert sind, wobei ein erstes demontierbares Zylinderglied mit einer Vielzahl von Rasenrechenelementen versehen ist und ein zweites demontierbares Zylinderglied mit einer Vielzahl von Vertikutierelementen versehen ist.

15. Rasenpflegevorrichtung nach Anspruch 14,
wobei dass die Rasenpflegevorrichtung ein weiteres demontierbares Zylinderglied in Form einer Rasenmäher-Zylinderschneidklingen-Baueinheit umfasst.

16. Rasenpflegevorrichtung nach einem der Ansprüche 1 bis 6,
wobei das Zylinderglied die Form einer Rasenmäher-Zylinderschneidklingen-Baueinheit aufweist.

## Revendications

1. Appareil (10) pour entretenir le gazon, comprenant un organe cylindrique (14) en rotation autour d'un axe transversal à l'intérieur d'une chambre de travail cylindrique (13), dans lequel ledit organe cylindrique (14) comprend une pluralité d'éléments d'entretien de gazon, et l'appareil comprend des moyens de collecte pour collecter des matières enlevées, en utilisation; depuis un gazon ; **caractérisé en ce que** l'organe cylindrique (14) a la forme d'une soufflante définissant un moyen de génération de flux d'air afin de générer un flux d'air et diriger des matières enlevées du gazon vers lesdits moyens de collecte ; et **en ce que** l'organe cylindrique (14) est monté dans la chambre de travail cylindrique (13) pour assurer un flux d'air sensiblement libre vers au moins une face terminale de l'élément cylindrique depuis l'extérieur de la chambre de travail cylindrique (13) et à travers le centre de l'organe cylindrique (14).

2. Appareil pour entretenir le gazon selon la revendication 1, dans lequel la soufflante comprend une soufflante à cage d'écureuil.

3. Appareil pour entretenir le gazon selon la revendication 1 ou 2, dans lequel l'organe cylindrique (14) comprend une pluralité de pales de soufflante (33) espacées en sens circonférentiel.

4. Appareil pour entretenir le gazon selon la revendication 3, dans lequel l'organe cylindrique (14) est formé par une pluralité d'éléments cylindriques (50) en interengagement.

5. Appareil pour entretenir le gazon selon la revendication 4, dans lequel chaque élément cylindrique (50) comprend un premier anneau duquel s'étend une pluralité d'éléments formant pales de soufflante arqués et circonférentiellement espacés, les éléments formant pales de soufflante se terminant à un second anneau ; dans lequel une pluralité de projections (54) s'étendent depuis chaque surface de la première bague en formant ensemble, dont l'organe cylindrique assemblé, des moyens d'attache pour les éléments d'entretien de gazon.

6. Appareil pour l'entretien du gazon selon le mode l'une quelconque des revendications 1 à 5, dans lequel l'organe cylindrique (14) inclut au moins une face terminale pourvue d'une pluralité d'éléments formant pales de soufflante (34).

7. Appareil pour l'entretien du gazon selon l'une quelconque des revendications 1 à 6, dans lequel les éléments d'entretien de gazon comprennent des éléments pour ratisser le gazon (25).

8. Appareil pour l'entretien du gazon selon la revendication 7, dans lequel les éléments pour ratisser le gazon comprennent des doigts élastiques (25).

9. Appareil pour l'entretien du gazon selon la revendication 7, dans lequel les éléments pour ratisser le gazon comprennent des doigts à ressort (25).

10. Appareil pour l'entretien du gazon selon l'une quelconque des revendications 1 à 6, dans lequel les éléments pour l'entretien du gazon comprennent les éléments de verticuteur.

11. Appareil pour l'entretien du gazon selon la revendication 10, dans lequel les éléments de verticuteur comprennent les éléments en disque.

12. Appareil pour l'entretien du gazon selon la revendication 10 ou 11, dans lequel les éléments de verticuteur comprennent des éléments en couteau.

13. Appareil pour l'entretien du gazon selon l'une quelconque des revendications précédentes, dans lequel l'organe cylindrique (14) est démontable.

14. Appareil pour l'entretien du gazon selon l'une quelconque des revendications précédentes, comprenant au moins deux organes cylindriques démontables (14) tels que définis dans l'une quelconque des revendications précédentes, dans lequel un premier organe cylindrique démontable est pourvu d'une pluralité d'éléments de ratissage de gazon et un second organe cylindrique démontable est pourvu d'une pluralité d'éléments de verticuteur.

15. Appareil pour l'entretien du gazon selon la revendication 14, comprenant un autre organe cylindrique démontable sous la forme d'un assemblage à lames de coupe cylindrique pour tondre le gazon.

16. Appareil pour l'entretien du gazon selon l'une quelconque des revendications 1 à 6, dans lequel l'organe cylindrique a la forme d'un assemblage à lames de coupe cylindrique pour tondre le gazon.
